# EUROPÄISCHE PATENTSCHRIFT

(11) **EP 2 953 572 B1**
(45) Veröffentlichungstag und Bekanntmachung des Hinweises auf die Patenterteilung: **09.05.2018**
(21) Anmeldenummer: 14709199.5
(22) Anmeldetag: 11.02.2014
(51) Int. Cl.: A61C 1/00, A61C 1/18

(54) **ZAHNÄRZTLICHES PRÄPARATIONSINSTRUMENT MIT EINER DRUCKLUFTBETRIEBENEN TURBINE**
DENTAL PREPARATION INSTRUMENT WITH A PNEUMATIC TURBINE
INSTRUMENT DE PRÉPARATION DENTAIRE MUNI D'UNE TURBINE À AIR COMPRIMÉ

(30) Priorität: 11.02.2013 DE 102013202174
(43) Veröffentlichungstag der Anmeldung: 16.12.2015
(73) Patentinhaber: Sirona Dental Systems GmbH, 64625 Bensheim (DE)
(72) Erfinder: ERTUGRUL, Metin, 63322 Rödermark (DE); GOISSER, Siegfried, 64683 Einhausen (DE)
(74) Vertreter: Sommer, Peter
(86) Internationale Anmeldenummer: PCT/EP2014/052586
(87) Internationale Veröffentlichungsnummer: WO 2014/122316

(56) Entgegenhaltungen:
- EP-A1- 0 830 848
- CH-A5- 689 796
- DE-C1- 4 320 532

## Beschreibung

### Technisches Gebiet

Die Erfindung betrifft ein zahnärztliches Präparationsinstrument nach Anspruch 1.

### Stand der Technik

Aus der DE 195 18 703 A1 ist eine zahnärztliche Antriebseinheit mit einer in Rotation versetzbaren Welle beschrieben, wobei zugeführte Druckluft nach verrichteter Arbeit am Laufrad vom Laufradraum in einen Ringraum und über diesen in eine erste Kammer gelangt. Um von dem Ringraum in die erste Kammer zu gelangen, muss die Abluft durch eine Durchlassöffnung strömen, die durch das Laufrad und eine abschnittsweise zylindrische Trennwand begrenzt wird. Zur Begrenzung der Leerlaufdrehzahl ist ein formvariables, elastisches Stellmittel in das Laufrad integriert, wobei im Leerlaufbetrieb mit den höchsten Drehzahlen infolge von Zentrifugalkräften dieses Stellmittel die Querschnittsfläche der Durchlassöffnung reduziert und gegebenenfalls vollständig verschließt. Da im Leerlaufbetrieb der Bereich des Laufrads mit dem größten Durchmesser gegenüber der Auslassöffnung und dem Rückluftkanal verschlossen ist und sich erst aufgrund der sinkenden Drehzahl wieder öffnet, entsteht im Leerlaufbetrieb nach dem Verschließen ein Druckgefälle zwischen der Laufradaußenkante und den achsnahen Bereichen des Laufrads bis hin zum Rückluftkanal, was eine unerwünschte Saugwirkung von dentalen Turbinen in der Auslaufphase verstärken kann.

Aus der EP 0 974 308 A1 ist ein Turbinen-Handstück mit einem Strömungssteg bekannt, der in Zusammenwirkung mit dem in der Turbinenkammer mitrotierenden Druckmittelstrom einen Vorhang vor der Auslassöffnung der Turbinenkammer bildet. Die Strömung wird durch den Strömungssteg soweit radial nach innen in die Turbinenkammer entgegen der Auslassrichtung umgelenkt, dass sie daran gehindert ist, durch die Auslassöffnung auszutreten und folglich in der Turbinenkammer verbleibt. Damit wird erschwert, dass sich im Nachlauf eine das Einsaugen begünstigende Strömung ausbilden kann. Ein Nachteil ist, dass sich der Strömungssteg über die gesamte Auslassöffnung erstreckt und dass mit Leistungseinbußen sowie einer Beschränkung der Gestaltung der Auslassöffnung und insbesondere des Auslassquerschnittes zu rechnen ist.

Aus der DE 103 20 903 A1 ist eine Kammer bekannt, die an die Turbinenkammer angrenzt. Durch Zentrifugalkräfte wird die Luft in diese Kammer gedrückt und somit ein lokal begrenzter Überdruck erzeugt. Aus dieser Kammer führt eine Nebenströmung an der Unter- und Oberseite des Laufrads vorbei zu den Öffnungen der Lager. Das in dieser Kammer erzeugte Druckpolster ist drehzahlabhängig und besteht sowohl im Betrieb als auch im Nachlauf, dann allerdings mit der Drehzahl fallend. Auch im Nachlauf soll so der Saugwirkung entgegengewirkt werden.

Aus der DE 692 01 133 T2 sind Bremsmittel zum Abbremsen bzw. Anhalten des Laufrads beschrieben. Die Bremsmittel werden durch eine Steuerströmung von einem Fluid betätigt und umfassen ein elastisch deformierbares Organ mit Anlegemitteln und Gegenanlegemitteln, die die Drehung des Laufrads durch Reibung abbremsen. Der Reibkontakt verursacht durch die hohen Drehzahlen sehr viel Wärme und es entsteht ein Abrieb, so dass mit der Zeit die Wirkung der Bremse durch Verschleißerscheinungen verringert ist. Zudem wird durch den Abrieb der Laufradinnenraum verunreinigt. Diese Partikel können auch in den Patientenmund gelangen, was ebenfalls unerwünscht ist.

Aus der EP 0 629 383 B1 ist eine Abströmkammer bekannt, die an der dem Werkzeug zugewandten Seite des Laufrades positioniert ist. An diese werkzeugseitige Abströmkammer grenzt ein Abströmkanal, der achsnah der werkzeugseitigen Laufradwelle angeordnet ist und in Richtung der werkzeugseitigen Laufradlager verläuft und eine Öffnung zum Rückluftkanal besitzt. Durch diese Anordnung der Abströmkammer, des Abströmkanals sowie des Rückluftauslasses wird der Bereich des Laufrads mit dem größten Durchmesser vom Rückluftauslass getrennt. Die vom Laufrad im Nachlauf radial nach außen zentrifugierte Luft kann nicht abströmen. Im Bereich des Rückluftauslasses liegen keine nennenswerten Unterschiede im Durchmesser vor, welches sich hinsichtlich der Reduzierung der Saugwirkung äußerst wirkungsvoll erweist. Ein wesentlicher Nachteil dieser Erfindung liegt an der zwangsläufig ungünstigen Gestaltung der Rückluftführung, da die gesamte Abluft die Abströmkammern durchströmen muss um zum Rückluftkanal zu gelangen. Zum Einen ist dadurch der minimale Querschnitt, den die Abluft durchströmen muss, sehr stark reduziert und führt zu einem Rückstau im Laufradraum. Zum Anderen muss die Abluft, aus dem Laufradraum mit dem größten Durchmesser radial entgegen der Zentrifugalkraft in Richtung des achsnah positionierten Abströmkanals mit geringem Durchmesser strömen. Dies geht mit nachteiligen Leistungsverlusten einher. Aus der EP 0 830 848 A1 ist ein zahnärztliches Präparationsinstrument mit einer druckluftbetriebenen Turbine bekannt, bei dem die Turbinenkammer strömungstechnisch mit dem Auslasskanal über einen Ringkanal verbunden ist, und der Ringkanal auf der dem Werkzeug zugewandten Seite der Turbinenkammer angeordnet ist.

Die Aufgabe der Erfindung besteht darin, das Einsaugen des Laufrads im Nachlauf, also ohne Antrieb weiter zu verringern.

### Offenbarung der Erfindung

Gemäß der Erfindung wird diese Aufgabe mit den Merkmalen des Anspruchs 1 gelöst, indem die erste radiale Trennwand eine Öffnung aufweist, über welche der Ringraum mit dem Auslasskanal strömungstechnisch verbunden ist.

Durch die Öffnung in der Trennwand des ersten Ringraums wird das Einsaugen im Nachlauf verhindert und eine sehr einfach herstellbare und damit kostengünstige Lösung ohne Verschleißteile und ohne wesentliche Leistungseinbußen bei Nenndrehzahl bereitgestellt. Dabei wird im Nachlauf eine Strömungsführung vom zweiten Ringkanal zum ersten Ringkanal als Sperrströmung genutzt und damit das Einsaugen über das Lager im Nachlauf verhindert.

Vorteilhafterweise kann ein drehzahlabhängig verformbares Stellmittel vorgesehen sein, das sich unter Fliehkrafteinwirkung bei hoher Drehzahl verformt, wobei das Stellmittel in einem Aufnahmeraum in dem Laufrad angeordnet ist und wobei der Aufnahmeraum über einen Regelring unter Ausbildung eines Spaltes abgedeckt ist, wobei der Regelring mindestens eine Durchlassöffnung zum zweiten Ringkanal aufweist und wobei zwischen dem Regelring und der axialen Trennwand ein weiterer Spalt besteht.

Durch die Aufteilung der Strömung ist es möglich, im Präparationsbetrieb bei geöffneten Spalten eine hohe Leistung bereitzustellen und die Drehzahl im Leerlaufbetrieb durch teilweises oder vollständiges Verschließen des Spalts zwischen dem Laufrad und dem Regelring zu begrenzen. Der Spalt zwischen dem Regelring und der axialen Trennwand stellt vielmehr einen auch unter Verformung des Stellmittels nach wie vor noch definiert vorhandenen kleinsten Strömungsquerschnitt sicher.

Die Regelfunktion der Leerlaufdrehzahl über das Stellmittel und über den Regelring ist vollkommen unabhängig von der Öffnung in der Trennwand des ersten Ringraums und wird dadurch nicht beeinträchtigt und es wird ausdrücklich darauf hingewiesen, dass die Regelfunktion auch in einem Präparationsinstrument verwendet werden kann, das ohne dies Öffnung in der ersten Trennwand ausgebildet ist.

Vorteilhafterweise kann das Stellmittel derart verformbar sein, dass es bei hoher Drehzahl, vorzugsweise ab eine Drehzahl von 250.000 1/60s den Spalt zwischen dem Regelring und dem Laufrad durch elastische Verformung verschließt und dass in einem Lastzustand mit geringerer Drehzahl, vorzugsweise kleiner als eine Drehzahl von 200.000 1/60s der Spalt zwischen dem Regelring und dem Laufrad frei von einer strömungstechnischen Beeinträchtigung des Stellmittels ist.

In diesen Bereichen ist eine ausreichende Leistungsversorgung bei gleichzeitiger Vermeidung einer Lagerbeanspruchung durch zu hohe Drehzahlen möglich.

Vorteilhafterweise kann die Öffnung in der Trennwand mindestens 20 % des Querschnitts des Ringkanals einnehmen, vorzugsweise mehr als 60 % des Querschnitts.

Dadurch kann ein Einsaugen im Nachlauf verringert werden und trotzdem die Leistungseinbuße bei der Nenndrehzahl gering gehalten werden. Es hat sich herausgestellt, dass selbst eine vollständige Öffnung des Ringkanals durch eine Öffnung von 100% der Trennwand in der Praxis noch befriedigende Ergebnisse liefert.

### Kurze Beschreibung der Zeichnungen

Das erfindungsgemäße Verfahren wird anhand der Zeichnung erläutert. Es zeigen:
- Fig. 1: einen Längsschnitt durch ein zahnärztliches Präparationsinstrument mit einer druckluftbetriebenen Turbine, aufgeteilt in eine rechte und eine linke Seite;
- Fig. 2: einen Schnitt entlang der Linie AA aus Fig. 1;
- Fig. 3: einen Schnitt entlang der Linie BB aus Fig 1;
- Fig. 4: die Strömungsführung im Betriebszustand unter Last bei Nenndrehzahl im Detail;
- Fig. 5: die Strömungsführung im Betriebszustand Leerlauf im Detail;
- Fig. 6: eine schematische Zeichnung des Präparationsinstruments als Gesamtdarstellung.

### Ausführungsform der Erfindung

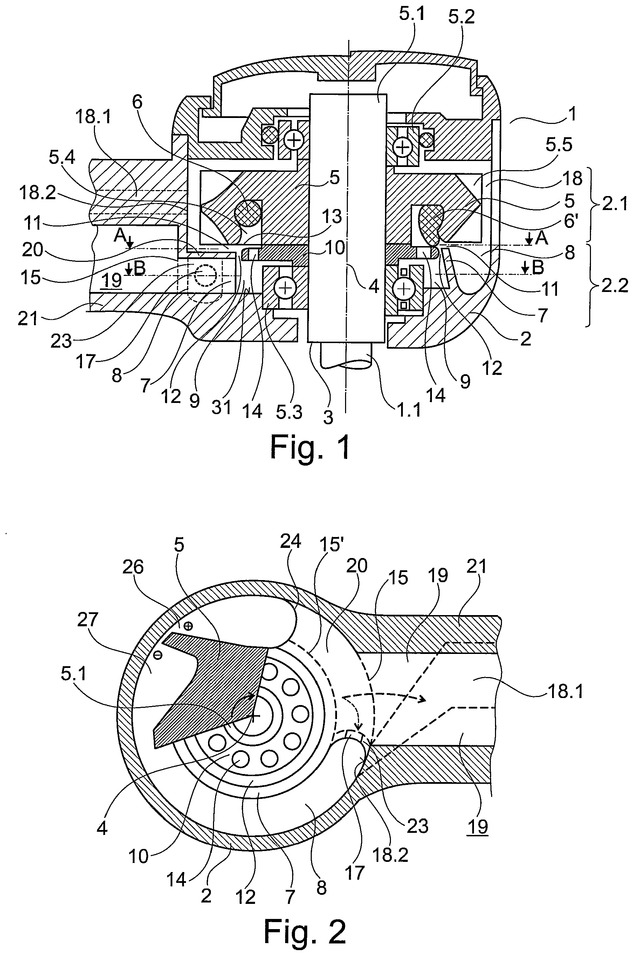

In Fig. 1 ist ein zahnärztliches Präparationsinstrument mit einer druckluftbetriebenen Turbine 1 zum Antrieb eines Werkzeugs 1.1 dargestellt, das einen in einem Kopfgehäuse 2 gelagerten Rotor 3 aufweist, der ein um eine Rotationsachse 4 drehbares Laufrad 5 sowie eine das Laufrad 5 tragende Welle 5.1 und zu beiden Seiten des Laufrads 5 angeordnete Lager 5.2, 5.3 zur Lagerung der Welle 5.1 im Kopfgehäuse 2 aufweist.

Das Laufrad 5 weist an einer seiner beiden Stirnseiten, hier an der dem nicht dargestellten Werkzeug zugewandten unteren Seite einen ringförmig umlaufenden Aufnahmeraum 5.4 für ein Stellmittel 6 auf, das im dargestellten Ausführungsbeispiel als unter Drehzahleinwirkung elastisch verformbarer O-Ring ausgebildet ist.

Die für den Antrieb des Laufrads verwendete Druckluft wird über Schaufeln 5.5 am Laufrad umgelenkt und strömt von diesen ab.

In der linken Seite der entlang der Rotationsachse 4 geteilten Fig. 1 ist das Stellmittel 6 unverformt dargestellt, in der rechten Seite der Fig. 1 ist das Stellmittel 6' unter Drehzahleinfluss elastisch verformt.

Das Laufrad 5 ist in einer Turbinenkammer 18 im Kopfgehäuse 2 angeordnet, in welche ein durch das Kopfgehäuse 2 geführter Druckluftkanal 18.1 und ein ebenfalls durch das Kopfgehäuse 2 geführter Rückluftkanal 19 münden, der aber zu dem Druckluftkanal 18.1 auf die Rotationsachse 4 bezogen axial beabstandet ist, wobei die Auslassöffnung 15 des Rückluftkanals 19 unterhalb der Druckluftöffnung 18.2 des Druckluftkanals 18.1 liegt, also zu dem nicht dargestellten Werkzeug hin. Der Druckluftkanal 18.1 und der Rückluftkanal 19 liegen in einem Griffstück 21 des Kopfteils 2, das in dieses übergeht.

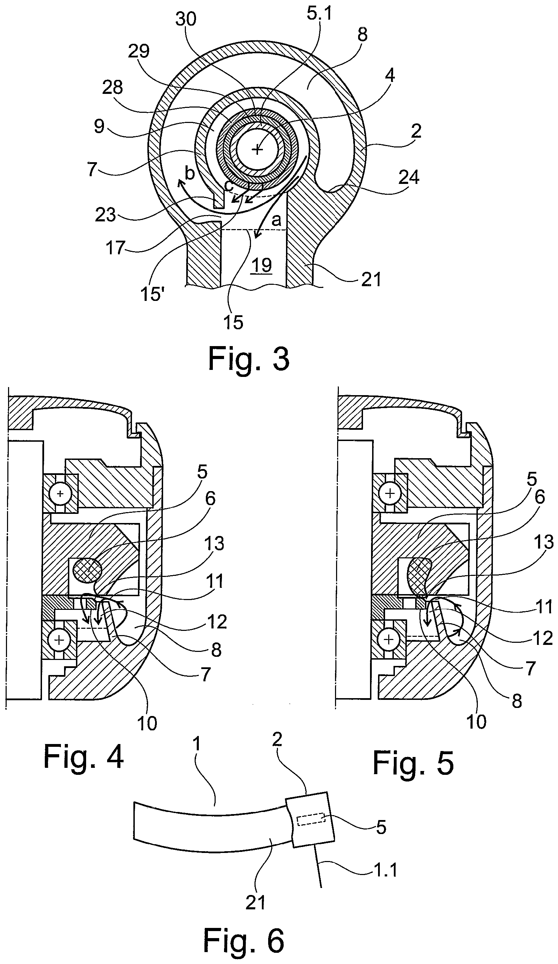

Die Turbinenkammer 18 weist in ihrem sich zu dem Werkzeug 1.1 hin angeordneten unteren Bereich eine nur zur Auslassöffnung 15 hin unterbrochene erste ringförmige Trennwand 7 mit einer Mantelfläche koaxial zur Rotationsachse 4 zur Abgrenzung eines ersten außenseitigen Ringkanals 8 und eine scheibenförmige Trennwand 20 auf, die sich in einander übergehend über einen Teil des Umfangs erstrecken. Dabei ist die Trennwand 20 im Bereich der Auslassöffnung 15 und der Druckluftöffnung 18.2 angeordnet und der Ringkanal 8 erstreckt sich von der Druckluftöffnung 18.2 ausgehend mindestens um einen Winkel von 90°, vorzugsweise über einen Winkel von bis zu 320°, siehe hierzu später Fig. 2 und 3.

Radial innenliegend zur im unteren Bereich der Turbinenkammer 18 angeordneten Trennwand 7 ist ein zweiter Ringkanal 9 vorhanden, der in radialer Richtung vom Lager 5.3 begrenzt wird, das im Kopfgehäuse 2 abgestützt ist. Dieser zweite Ringkanal 9 ist, wie auf der linken Seite der Fig. 1 dargestellt, axial begrenzt durch die scheibenförmige Trennwand 20 und ist über die Aussparung in der Trennwand 7 und über die Auslassöffnung 15 mit dem Auslasskanal 19 strömungstechnisch verbunden.

Der untere Bereich 2.2 der im Kopfgehäuse 2 angeordneten Turbinenkammer 18 weist eine Höhe von 20% bis 75% der Bauhöhe des das Laufrad 5 aufnehmenden Bereichs 2.1 auf.

Zwischen dem Laufrad 5 und der ringförmigen Trennwand 7 ist ein Spalt 11 ausgebildet, der als Hauptquerschnittsfläche A₀ für das Ausströmen der der Turbinenkammer 18 zugeführten Druckluft vom Laufrad 5 weg und zur Auslassöffnung 15 hin bezeichnet wird und der den maximal möglichen Luftstrom der Turbine begrenzt, da sämtliche für den Antrieb des Laufrads 5 genutzte Luft zuerst durch diesen Spalt 11 hindurchtreten muss.

Zwischen dem unteren Lager 5.3 und dem Laufrad 5 ist ein Regelring 10 angeordnet, der wie das Lager 5.3 und das Laufrad 5 ebenfalls auf der Welle 5.1 abgestützt ist. Dieser Regelring 10 ist in der Turbinenkammer 18 am Übergang des das Laufrad 5 aufnehmenden Bereichs 2.2 zu dem Bereich 2.1, in dem die Ringkanäle 8, 9 angeordnet sind, angeordnet. Die radiale Erstreckung des Regelrings 10 geht bis zu der radialen Trennwand 7, wobei ein Spalt 12 vorhanden ist, dessen Querschnittsfläche als Steuerquerschnittsfläche A₁ bezeichnet wird und die kleiner als die Hauptquerschnittsfläche A₀ ist.

Die vom Laufrad 5 abgeströmte, auch als Rückluft bezeichnete Druckluft gelangt über den axialen Spalt 11 zwischen dem Laufrad 5 und der ringförmigen Trennwand 7 zu dem radialen Spalt 12 zwischen der Trennwand 7 und dem Regelring 10 und gelangt abhängig vom Betriebszustand wie in der rechten Hälfte der Fig. 1 bei hoher Drehzahl dargestellt im Gesamten in den zur Auslassöffnung führenden Ringraum 9. Dabei findet gegenüber der Hauptquerschnittsfläche eine Querschnittsverringerung statt und die über die Hauptquerschnittsfläche theoretisch möglichen hohen Drehzahlen werden durch die Steuerquerschnittsfläche des Spalts 12 begrenzt.

In dem Betriebszustand wie in der linken Hälfte der Fig. 1 bei geringer Drehzahl dargestellt strömt die Rückluft sowohl durch den Spalt 12 zwischen der ringförmigen Trennwand 7 und dem Regelring 10 als auch durch einen Spalt 13 zwischen dem Regelring 10 und dem im Laufrad 5 angeordneten Aufnahmeraum 5.4 für das drehzahlabhängige Stellmittel 6. Dieser Spalt 13 kann eine groß bemessenen Querschnittsfläche aufweisen, die auch größer als die Hauptquerschnittsfläche sein kann, da die in den Aufnahmeraum 5.4 einströmende Rückluft durch einen im Regelring 10 angeordneten Durchlass 14 bzw. über mehrere über den Umfang verteilt angeordnete Durchlässe in den zweiten Ringraum 9 austreten kann. Der Spalt 13 stellt damit eine Regelquerschnittsfläche A₂ bereit, da die Querschnittsfläche des Durchlasses oder der Durchlässe 14 größer bemessen ist.

Im Leerlauf, also ohne Last und bei hohen Drehzahlen entspricht die tatsächlich wirksame Querschnittsfläche A_{eff} der Steuerquerschnittsfläche A₁, da der Spalt 13 vom sich verformenden Stellmittel verschlossen ist. Im Betrieb unter Last, also bei dem Eingriff eines Werkzeugs zur Bearbeitung eines Zahns, sinkt die Drehzahl zunächst ab und der Spalt 13 wird drehzahlabhängig freigegeben. Die Regelquerschnittsfläche ist so bemessen, dass vollständig geöffnet zusammen mit der Steuerquerschnittsfläche mindestens die Hauptquerschnittsfläche bereitgestellt wird. Die effektive Querschnittsfläche setzt sich aber sowohl aus der Steuerquerschnittsfläche als auch aus der drehzahlabhängigen Regelquerschnittsfläche zusammen.

Aus dem zweiten Ringkanal 9 strömt die Rückluft unter der scheibenförmigen Trennwand 20 in radialer Richtung an dem Ringkanal 8 vorbei, wobei in einer radialen Trennwand 23 zur Abtrennung des Ringkanals 8 im Bereich der Auslassöffnung 15 eine Durchlassöffnung 17 vorgesehen ist, über die die Rückluft auch wieder in den ersten Ringkanal 8 einströmen kann, etwa im Nachlauf.

In Fig. 2 ist ein Schnitt quer durch das Kopfgehäuse 2 in Höhe des Spaltes 11 gezeigt, also zwischen dem durchbrochen dargestellten und oberhalb der Schnittebene liegenden Laufrad 5 und dem unterhalb der Schnittebene liegenden Regelring 10. In dem Regelring 10 sind die Durchlässe 14 erkennbar, die über den Umfang verteilt angeordnet sind. Der Regelring 10 ist auf der Welle 5.1 befestigt und dreht sich mit dieser um die Rotationsachse 4. Am Außenumfang des Regelrings 10 befindet sich der Spalt 12 zur ringförmigen Trennwand 7, die den Ringkanal 8 radial innenseitig begrenzt. Die radial äußere Grenze des Ringkanals 8 ist durch das Kopfgehäuse 2 gebildet. Der Ringkanal 8 weist eine in Strömungsrichtung der Druckluft vorne liegende radiale Trennwand 23 auf, welche den Ringkanal 8 gegenüber der Auslassöffnung 15 abtrennt, wobei in der Trennwand 23 allerdings eine Durchlassöffnung 17 angeordnet ist, durch welche Rückluft in den Ringkanal 8 einströmen kann, dargestellt durch einen auf die Durchlassöffnung 17 gerichteten Pfeil. In Strömungsrichtung abwärts liegend gesehen ist der Ringkanal durch eine zweite radiale Trennwand 24 begrenzt.

Es ist festzustellen, dass der Ringkanal 8 im Bereich der Auslassöffnung 15 durch die radialen Trennwände 23, 24 und durch die scheibenförmige Trennwand 20 unterbrochen ist, sodass aus dem Ringraum 8 selbst keine Luft in den Rückluftkanal 19 gelangen kann, sondern dass die Rückluft über den Spalt 12 und gegebenenfalls über die Durchlässe 14 im Regelring 10 in den Bereich unterhalb der scheibenförmigen Trennwand 20 und zwischen den radialen Trennwänden 23, 24 gelangt und von dort aus über die Auslassöffnung 15 in den Rückluftkanal 19 strömt, dargestellt durch den langen gestrichelten Pfeil.

Oberhalb der Zeichenebene und damit oberhalb der Schnittebene ist der über das Griffstück 21 zum Kopfgehäuse 2 geführte Treibluftkanal 18.1 gestrichelt dargestellt und ebenso die Lage der Druckluftöffnung 18.2,die auch als Druckluftdüse bezeichnet werden kann. Über diese Druckluftöffnung 18.2 strömt die Druckluft in die Turbinenkammer ein und treibt den Laufrad an.

Die Saugseite 26 und die Druckseite 27 des Laufrades 5 sind im Nachlauf wie beschrieben mit den entsprechenden Druckvorzeichen belegt. Im Betrieb bei eingeschaltetem Druckluftdruck sind die Vorzeichen umgekehrt.

In Fig. 3 ist ein Schnitt durch das Kopfgehäuse 2 unterhalb der scheibenförmigen Trennwand 20 aus Fig. 1 und 2 gezeigt, die deswegen nicht dargestellt ist. Ausgehend vom Kopfgehäuse 2, das in das Griffstück 21 übergeht, ist der Ringraum 8 mit den radialen Trennwänden 23, 24 dargestellt, der zur Achse 4 hin durch die Trennwand 7 begrenzt ist. Die Trennwand 7 begrenzt den sich weiter nach innen erstreckenden Ringraum 9 und ist zum Rückluftkanal 19 hin durch die Auslassöffnung 15' unterbrochen. Am Übergang vom Kopfgehäuse 2 in das Griffstück 21 zum Rückluftkanal 19 hin ist die Auslassöffnung 15 angeordnet, wie bereits in Fig. 1 dargestellt.

Der Ringraum 9 wird in radialer Richtung durch das auf der Welle 5.1 angeordnete Lager 5.3 mit Lageraußenring 28 und der radialen Trennwand 7 und der Auslassöffnung 15' hin begrenzt, wobei das Lager 5.3 noch einen Lagerspalt 30 und einen Lagerinnenring 29 aufweist. In axialer Richtung wird der Ringraum 9 nach oben hin durch den Regelring 10 mit den Durchlassöffnungen 14 und dem Spalt 12 sowie nach unten zur Werkzeugseite durch das Lager 5.3 und einen Ringkanalboden 31 (Fig. 1) begrenzt.

Mit den Pfeilen a, b und c sind Strömungswege für die Luftströmung im Nachlauf angegeben, die näher erläutert werden. Der Pfeil a bezeichnet die Rückluft, die vom Ringraum 9 über die Auslassöffnung 15' strömt. Der Pfeil b bezeichnet die Rückluft, die vom Ringraum 9 über die Durchlassöffnung 17 in der Trennwand 23 in den Ringraum 8 strömt. Die Pfeile c bezeichnen die Luft, die gegebenenfalls über den Lagerspalt 30 in den Rückluftkanal 19 eingesaugt werden kann und die gebremst wird oder deren Entstehung sogar unterdrückt wird.

Die Durchlassöffnung 17 an der radialen Trennwand des Ringkanals 8 bewirkt beim Vorbeistreichen der Schaufeln des Laufrads 5 jeweils immer an der Saugseite der Schaufeln einen Sog aus dem Bereich des Rückluftkanals 19 bzw. der Auslassöffnung 15 in den ersten Ringkanal 8. Die Durchlassöffnung 17 verbindet demnach strömungstechnisch den ersten Ringkanal 8 mit dem Rückluftkanal 19 mit den Auslassöffnungen 15, 15'.

Auf der Saugseite der Schaufeln des Laufrads 5 werden Luftpartikel unterhalb der Regelscheibe 10 aus Fig. 2 im Bereich des Auslasskanals 19 mitgerissen. Dadurch entsteht eine Strömung gemäß Pfeil b von dem zweiten Ringraum 9 zu dem ersten Ringraum 8 quer zum Rückluftkanal 19 in Drehrichtung des Laufrads 5. Diese erzwungene Strömung gemäß Pfeil b erstreckt sich über die Auslassöffnung 15' und wirkt in gewisser Weise wie eine Barriere zwischen dem Rückluftkanal 19 und dem Ringraum 9, in dem sich rotierende Bauteile befinden.

Durch diese erzwungene Strömung wird der Rückluftkanal 19 im Bereich der Auslassöffnung 15 strömungstechnisch verschlossen und eine Beschleunigung der Luft, die im Nachlauf über den Lagerspalt 30 eingesaugt werden könnte, wird verhindert.

In den Fig. 4 und 5 werden zwei unterschiedliche Strömungszustände gezeigt, nämlich bei einer niedrigen und bei einer hohen Drehzahl des Laufrads 5. Wesentlich für den Unterschied des Strömungszustandes ist die drehzahlabhängige Verformung des Stellmittels 6, wie bereits zu Fig. 1 erläutert. Bei hohen Drehzahlen ist der Spalt 13 zwischen dem Regelring 10 und dem Laufrad 5 durch die Verformung des Stellmittels 6 verschlossen, dargestellt in Fig. 5 wohingegen der Spalt 13 bei niedrigen Drehzahlen geöffnet ist, dargestellt in Fig. 4. Wenn der Spalt 13 wie in Fig. 4 dargestellt geöffnet ist, teilt sich die aus dem Ringraum 8 stammende und durch den als Hauptquerschnittsfläche ausgebildeten Spalt 11 zwischen dem Laufrad 5 und der ringförmigen Trennwand 7 hindurchfließende Strömung der Rückluft auf und sowohl der Spalt 13 als auch der Spalt 12 zwischen dem Regelring 10 und der Trennwand 7 wird durchströmt.

Wenn der Spalt 13 wie in Fig. 5 dargestellt geschlossen ist, steht als Strömungsweg nach dem Spalt 11 nur noch der Spalt 12 zur Verfügung, der eine geringere Querschnittsfläche als der Spalt 11 aufweist. Dadurch wird sichergestellt, dass nicht die gesamte, bei niedriger Drehzahl unter Last für die Aufbringung des Drehmoments erforderliche Luftmenge durchströmen kann, sondern nur noch ein Teil dieser Luftmenge, was zu einer Begrenzung der Drehzahl des Laufrads im Leerlaufbetrieb führt.

Die Trennung Abluft in zwei Anteile, einerseits durch einen unveränderlichen ersten Querschnitt am Spalt 12 und andererseits durch einen drehzahlabhängig geregelten zweiten Querschnitt am Spalt 13, ermöglicht eine sehr effiziente Begrenzung der Leerlaufdrehzahl bei nur minimalen Leistungsverlusten.

Wenngleich im Leerlaufbetrieb das Stellmittel 6 zusammen mit der Trennwand 7 und 20 über den Spalt 13 die Turbinenkammer 18 gegenüber dem achsnahen Bereich des Laufrads 5 teilweise abschließt, ist dieser Spalt 13 im Nachlauf mit fallender Drehzahl wieder vollständig geöffnet. Zwischen dem Bereich des Laufrades 5 mit dem größten Durchmesser, also an der Außenkante des Laufrads und der Auslassöffnung 15 des Rückluftkanals 19 existiert dann ein durchgängiger Luftpfad. Ohne die erfindungsgemäße Durchlassöffnung 17 besteht im Nachlauf eine erhöhte Gefahr der Einsaugung über das untere Lager.

## Patentansprüche

1. Zahnärztliches Präparationsinstrument mit einer druckluftbetriebenen Turbine (1) mit einem Laufrad (5) zum Antrieb eines Werkzeugs (1.1), wobei das in einer Turbinenkammer (18) angeordnete, um eine Rotationsachse (4) drehbare Laufrad (5) über eine Druckluftdüse (22) mit Druckluft angeströmt ist, wobei auf der dem Werkzeug (1.1) zugewandten Seite der Turbinenkammer (18) ein mit der Turbinenkammer (18) strömungstechnisch verbundener erster Ringkanal (8) angeordnet ist, der sich über einen Winkelbereich (α) des Umfangs der Turbinenkammer (18) erstreckt und der im Bereich der Druckluftdüse (18.2) eine erste radiale Trennwand (23) zum Auslasskanal (19) hin aufweist und am Ende des Winkelbereichs in einem Abstand zum Auslasskanal (19) eine zweite radiale Trennwand (24) sowie eine ringförmige Trennwand (7) aufweist, wobei die ringförmige Trennwand im Bereich des Auslasskanals (19) unterbrochen ist und wobei ein zweiter Ringkanal (9) radial innenliegend zum ersten Ringkanal (8) vorhanden ist, der im Bereich der unterbrochenen Trennwand (7) zum Auslasskanal (19) hin geöffnet ist, wobei zwischen den beiden radialen Trennwänden (23, 24) eine sich in Umfangsrichtung über den verbleibenden Winkelbereich (360°-α erstreckende scheibenförmige Trennwand (20) vorhanden ist, welche die Turbinenkammer (18) gegenüber dem Auslasskanal (19) abschließt, wobei die erste radiale Trennwand (23) eine Öffnung (17) aufweist, über welche der erste Ringkanal (8) mit dem Auslasskanal (19) strömungstechnisch verbunden ist.

2. Zahnärztliches Präparationsinstrument nach Anspruch 1, **dadurch gekennzeichnet, dass** ein drehzahlabhängig verformbares Stellmittel (6) vorgesehen ist, das sich unter Fliehkrafteinwirkung ab einer Drehzahl von 250.000 1/60s verformt, wobei das Stellmittel (6) in einem Aufnahmeraum (5.4) in dem Laufrad (5) angeordnet ist und dass der Aufnahmeraum (5.4) über einen Regelring (10) unter Ausbildung eines Spaltes (13) abgedeckt ist, wobei der Regelring (10) mindestens eine Durchlassöffnung (14) zum zweiten Ringkanal (9) aufweist und wobei zwischen dem Regelring (10) und der axialen Trennwand (7) ein weiterer Spalt (12) besteht.

3. Zahnärztliches Präparationsinstrument nach Anspruch 2, **dadurch gekennzeichnet, dass** das Stellmittel (6) derart verformbar ist, dass es ab einer Drehzahl von 250.000 1/60s den Spalt (13) zwischen dem Regelring (10) und dem Laufrad (5) durch elastische Verformung verschließt und dass in einem Lastzustand mit einer Drehzahl, kleiner als 200.000 1/60s der Spalt (13) zwischen dem Regelring (10) und dem Laufrad (5) frei von einer strömungstechnischen Beeinträchtigung des Stellmittels (6) ist.

4. Zahnärztliches Präparationsinstrument nach einem der Ansprüche 1 bis 3, **dadurch gekennzeichnet, dass** die Öffnung (17) in der Trennwand (23) mindestens 20 % des Querschnitts des Ringkanals (8) einnimmt, vorzugsweise mehr als 60 % des Querschnitts.

## Claims

1. Dental preparation instrument with a compressed air-driven turbine (1) with an impeller (5) for driving a tool (1.1), wherein the impeller (5), which is arranged in a turbine chamber (18) and is rotatable about an axis of rotation (4), is impinged upon by compressed air via a compressed air nozzle (22), wherein, on the side of the turbine chamber (18) facing the tool (1.1), a first ring channel (8) is disposed, which is fluidically connected to the turbine chamber (18), extends over an angular range (α) of the circumference of the turbine chamber (18) and, in the area of the compressed air nozzle (18.2), comprises a first radial partition wall (23) toward the outlet channel (19) and, at the end of the angular range at a distance from the outlet channel (19), comprises a second radial partition wall (24) as well as an annular partition wall (7), wherein the annular partition wall is interrupted in the area of the outlet channel (19), and wherein a second ring channel (9) is provided radially to the inside of the first ring channel (8) and, in the area of the interrupted partition wall (7), is open to the outlet channel (19), wherein, between the two radial partition walls (23, 24), a disc-shaped partition wall (20) is provided, which extends in circumferential direction over the remaining angular range (360°-α) and closes off the turbine chamber (18) with respect to the outlet channel (19), wherein the first radial partition wall (23) comprises an opening (17), via which the first ring channel (8) is fluidically connected to the outlet channel (19).

2. Dental preparation instrument according to Claim 1, **characterized in that** a rotational speed-dependently deformable adjusting means (6) is provided, which deforms under the effect of centrifugal force above a rotational speed of 250,000 1/60s, wherein the adjusting means (6) is disposed in a receiving space (5.4) in the impeller (5), and **in that** the receiving space (5.4) is covered via a control ring (10), forming a gap (13), wherein the control ring (10) comprises at least one passage opening (14) to the second ring channel (9), and wherein there is an additional gap (12) between the control ring (10) and the axial partition wall (7) .

3. Dental preparation instrument according to Claim 2, **characterized in that** the adjusting means (6) is deformable in such a way that, above a rotational speed of 250,000 l/60s, it closes the gap (13) between the control ring (10) and the impeller (5) by means of elastic deformation, and that, in a load condition with a rotational speed below 200,000 l/60s, the gap (13) between the control ring (10) and the impeller (5) is free of a fluidic impairment of the adjusting means (6).

4. Dental preparation instrument according to any of Claims 1 to 3, **characterized in that** the opening (17) in the partition wall (23) takes up at least 20% of the cross section of the ring channel (8), preferably more than 60% of the cross section.

## Revendications

1. Instrument de préparation dentaire comprenant une turbine à air comprimé (1) munie d'une roue (5) destinée à entraîner un outil (1.1), la roue (5) étant située dans une chambre de turbine (18) de manière rotative autour d'un axe de rotation (4) et balayée par de l'air comprimé par l'intermédiaire d'une buse à air comprimé (22), dans lequel est présent, sur le côté orienté vers l'outil (1.1) de la chambre de turbine (18), un canal annulaire (8) raccordé selon la technique des fluides à la chambre de turbine (18), ledit canal s'étendant sur une zone angulaire (α) de la circonférence de la chambre de turbine (18) et présentant, dans la zone de la buse à air comprimé (18.2), une première paroi de séparation radiale (23) dirigée vers le canal de sortie (19) et, au niveau de l'extrémité de la zone angulaire, à une certaine distance du canal de sortie (19), une seconde paroi de séparation radiale (24) ainsi qu'une paroi de séparation annulaire (7), ladite paroi de séparation annulaire étant interrompue dans la zone du canal de sortie (19), et un second canal annulaire (9) étant prévu radialement sur l'intérieur par rapport au premier canal annulaire (8) en étant ouvert, dans la zone de la paroi de séparation (7) interrompue, vers le canal de sortie (19), une paroi de séparation (20) en forme de disque étant présente entre les deux parois de séparation radiales (23, 24) en s'étendant, dans le sens de la circonférence, sur la zone angulaire restante (360°- α), ladite paroi de séparation (20) fermant la chambre de turbine (18) par rapport au canal de sortie (19), la première paroi de séparation radiale (23) présentant une ouverture (17) par le biais de laquelle le premier canal annulaire (8) est raccordé selon la technique des fluides avec le canal de sortie (19).

2. Instrument de préparation dentaire selon la revendication 1, **caractérisé en ce qu'**il est prévu un moyen de réglage (6) déformable en fonction de la vitesse de rotation, lequel se déforme sous l'influence de la force centrifuge à partir d'une vitesse de rotation de 250 000 tr/min, le moyen de réglage (6) étant disposé dans un espace de réception (5.4) dans la roue (5), et **en ce que** l'espace de réception (5.4) est couvert par le biais d'une bague de réglage (10) en formant une fente (13), la bague de réglage (10) présentant au moins une ouverture de passage (14) vers le second canal annulaire (9), une autre fente (12) étant constituée entre la bague de réglage (10) et la paroi de séparation axiale (7).

3. Instrument de préparation dentaire selon la revendication 2, **caractérisé en ce que** le moyen de réglage (6) est déformable de manière à fermer la fente (13) entre la bague de réglage (10) et la roue (5), par déformation élastique à partir d'une vitesse de rotation de 250 000 tr/min et **en ce que**, dans un état de charge présentant une vitesse de rotation inférieure à 200 000 tr/min, la fente (13) entre la bague de réglage (10) et la roue (5) est libre de l'influence du moyen de réglage (6) selon la technique des fluides.

4. Instrument de préparation dentaire selon l'une des revendications 1 à 3, **caractérisé en ce que** l'ouverture (17) dans la paroi de séparation (23) occupe au moins 20 % de la section transversale du canal annulaire (8), de préférence plus de 60 % de la section transversale.
